# EUROPEAN PATENT APPLICATION

(11) **EP 4 818 341 A1**
(43) Date of publication of application: **07.10.2026**
(21) Application number: 25168564.0
(22) Date of filing: 04.04.2025
(51) Int. Cl.: C22B 26/12, H01M 10/54, C22B 7/00, C22B 1/00, C22B 23/00, C22B 3/00, C22B 47/00

(54) **SUSTAINABLE BATTERY BLACK MASS RECYCLING PROCESS**

(71) Applicant: Metso Finland Oy, 02230 Espoo (FI)
(72) Inventor: BUDHATHOKI, Roshan, 02230 Espoo (FI)
(74) Representative: Laine IP Oy

(57) **Abstract**

The present invention concerns a method for the recovery of metals from black mass. The method comprises the step of providing a black mass leach solution (1) containing lithium (Li) and one or more battery metals selected from the group of manganese (Mn), cobalt (Co), and nickel (Ni). The black mass leach solution is reacted (2) with ozone (O₃) to thereby selectively precipitate and recover said one or more of Mn, Co, and Ni as reaction products by stepwise pH adjustment. Furthermore, the method comprises subjecting the solution obtained after the recovery of the reaction products to a sulphate removal step (3).

## Description

### FIELD

The present invention concerns a method for the recovery of metals from black mass. In particular, the present invention concerns a sustainable method for the recovery of manganese, cobalt, and nickel from spent Li-ion batteries, wherein the products obtained by said method are suitable for use in solid state synthesis of cathode active materials.

### BACKGROUND

Energy storage devices have a central position in our every-day life and in our infrastructure. Currently, such energy storage solutions heavily rely on rechargeable batteries that contain battery metals. In particular lithium-ion (Li-ion) batteries have gained a stable position in our society through a wide use ranging from consumer electronics to grid-scale energy storage.

There are different types of Li-ion batteries, which all employ lithium (Li) compounds as cathode materials. Such cathode materials can contain other valuable battery metals as well, such as, nickel (Ni), cobalt (Co), and manganese (Mn). The widespread use of Li-ion batteries has increased the demand for said metals, the natural resources of which are limited. Thus, beside efficient recovery from primary natural resources, recovery of such metals from secondary resources, such as spent batteries, is of high importance.

Hydrometallurgical separation of metals from spent batteries typically proceeds via the recovery of a black mass, which contains cathode active material and potentially anode material, but from which wiring and other coarse solid battery components, such as plastic or steel parts, have already been removed. The next step is typically the separation of the cathode active material from the other components of the black mass, e.g. using mechanical, thermal and/or chemical pre-treatment steps, followed by acid leaching to solubilize the cathode active material, and prepare the metals contained therein for recovery.

Currently, the process for the separation and recovery of battery metals commonly relies on solvent extraction. As a technology, solvent extraction requires large volumes of process liquids, both organic solvents and water. Typically, several washing steps need to be carried out in the solvent extraction process, which in turn produce considerable amounts of effluents and also increase the fresh-water consumption. One problem with solvent extraction in industrial processes is the poor scalability, as the system output is dependent on the processing volumes and thereby the system size. The demand for large processing plants leads to high costs both in initial investments and in the maintenance of the system.

Further problems connected to the current metal recovery processes, such as solvent extraction, is the production of by-products, which not only require additional processing steps for removal from the effluents, but also increases the need for reaction chemicals. Such by-products typically include inorganic salts derived from the processing fluids, such as the formation of reaction products of sodium hydroxide in processes depending on acid leaching and subsequent neutralization. Additionally, it can be difficult to find industrial uses for the by-products produced in the solvent extraction processes, whereby these often are considered waste-products.

In the battery recycling process, the recovered battery metals are, after separation in individual processing steps, precipitated and processed further to a form suitable for use as raw materials in the battery industry. Typically, the precipitates cannot be directly utilized industrially, which further increases the complexity of the recycling process from waste materials to new products.

There is thereby a need for sustainable and scalable hydrometallurgical processes enabling simultaneous recovery of metals from battery waste materials.

### SUMMARY OF THE INVENTION

The present invention aims at solving at least some of the problems of the prior art. In particular, the present invention provides a sustainable method for battery mass recycling, wherein battery metals, such as manganese, cobalt, and nickel can be efficiently recovered as products that are suitable for use in the battery industry without further conversion.

More specifically, the present invention concerns a method for the recovery of metals from black mass, the method comprising the steps of:
- providing a black mass leach solution containing lithium (Li) and one or more battery metals selected from the group consisting of manganese (Mn), cobalt (Co), and nickel (Ni),
- reacting the black mass leach solution with ozone (O₃) and selectively precipitating and recovering said one or more battery metals selected from the group consisting of of Mn, Co, and Ni as reaction products by stepwise pH adjustment, and
- subjecting the solution obtained after the recovery of the reaction products to a sulphate removal step.

The advantages obtained using the present invention include high scalability, as the method is not strictly dependent on the ion saturation of processing liquids, as precipitates are allowed to form, thereby avoiding large liquid volumes. Furthermore, the method as described above enables a simple process scheme with only few chemical additions and with remarkedly reduced effluent streams and waste materials when compared to conventional methods, such as solvent extraction processes. Thereby, the method has relatively low environmental impact. The good scalability of the method makes it attractive for battery recycling projects of various sizes, which is further enhanced by the lower investments costs required when compared to solvent extraction systems.

In the method of the present invention, battery metals such as manganese, cobalt, and nickel, as well as lithium, can be selectively recovered at high purity, whereby these can be used as battery grade raw material in solid state synthesis of cathode active materials. The method thus provides for a holistic process by which battery black mass can be recycled and the valuable metals contained therein can be used in new batteries, all in a single processing unit, if so desired.

Furthermore, by selection of the chemicals used in the method, the waste-streams formed can be further reduced. For example, by using lithium hydroxide as neutralizing reagent, the precipitation of sodium sulphate within the process can be completely avoided, enabling the formation of value added products, such as barium sulphate, as by-products. The lithium hydroxide can, in turn, be recycled from the product stream, which improves the process economy. Despite the recycling, the method enables recovery of lithium at high recovery rates, such as 90 % or higher. Like for the other battery metals potentially present in the leach solution, lithium can be recovered directly as a battery grade chemical.

With reference to the aforesaid, the present invention is well suited for simultaneous recovery of all of lithium, manganese, cobalt, and nickel in one single process, wherein the products obtained have potential as raw material in the battery industry.

### BRIEF DESCRIPTION OF THE DRAWINGS

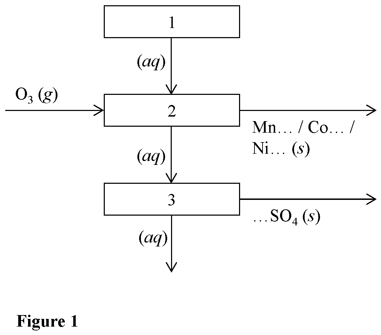

FIGURE 1 illustrates a process configuration in accordance with at least some embodiments of the present invention, with block 1 illustrating a step of providing a leach solution, such as through a leaching step, block 2 illustrating reacting the leach solution obtained in block 1 with ozone and recovering solid Mn, Co and Ni reaction products, when present in the leach solution, and block 3 representing a sulphate removal step.

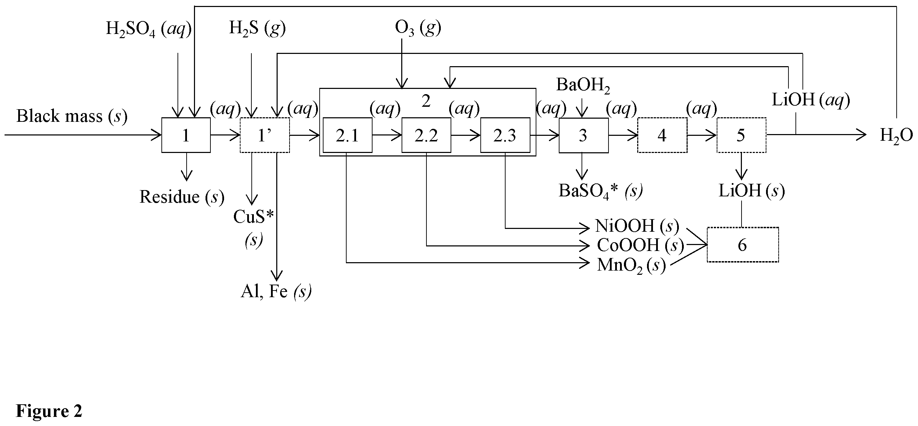

FIGURE 2 illustrates a process configuration in accordance with at least some preferred embodiments of the present invention, with block 1 illustrating a leaching step, thus representing the step of providing a leach solution, block 2 illustrating reacting the leach solution obtained in block 1 with ozone, and block 3 representing a sulphate removal step. Block 1' is an impurity removal step, in which Cu can be recovered and Al and Fe can be precipitated form solution. Block 2 is further divided into blocks 2.1 for recovery of Mn, block 2.2 for the recovery of Co, and block 2.3 for the recovery of Ni, in the form of the reaction products MnO₂, CoOOH, and NiOOH, respectively. In said process configuration, the sulphate removal step is illustrated as a barium sulphate precipitation step. Said sulphate removal is followed by an optional purification step, represented by block 4, and a step of recovering lithium hydroxide by crystallization, represented by block 5. The recovered battery metals are directly used in solid state synthesis of cathode active materials, which is represented by block 6. The optional recycling of water, such as a condensate from the LiOH crystallization, back to the leaching step, as well as the recirculation of LiOH to the steps requiring pH neutralization are illustrated with arrows. The parallel arrows in the LiOH recycling indicate that different purity grades can be used. The solid products marked with an asterisk represent value added products obtained in the process.

### EMBODIMENTS

### Definitions

As used herein, black mass can refer to processed or unprocessed black mass that is derived from spent batteries. Black mass contains cathode active material and potentially anode material, from which wiring and other coarse solid battery components has been removed. Thereby, the black mass typically has undergone at least mechanical processing, such as crushing and screening. The term black mass as used herein also includes black mass concentrates, such as black mass from which any anode material has been removed at least partially, forming a black mass rich in cathode active material (CAM).

Battery metals refer to valuable metals that typically are present in the black mass, in particular metals contained in the cathode active material. Such metals are nickel, cobalt, and manganese, as well as lithium. Said metals are typically present in the cathode materials in the form of oxides. In the context of the present disclosure, the recovery of metals primarily refers to the recovery of battery metals as mentioned above, without being limited thereto.

The present invention concerns a method for the recovery of metals from black mass, the method comprising the steps of:
- providing a black mass leach solution 1 containing lithium (Li) and one or more battery metals selected from the group consisting of manganese (Mn), cobalt (Co), and nickel (Ni),
- reacting the black mass leach solution 2 with ozone (O₃) and selectively precipitating and recovering said one or more battery metals selected from the group consisting of Mn, Co, and Ni as reaction products by stepwise pH adjustment, and
- subjecting the solution obtained after the recovery of the reaction products to a sulphate removal step 3.

The above method provides for a sustainable process for black mass recycling. Lithium can be recovered from the process as lithium hydroxide, which together with the selectively recovered reaction products that contains Mn, Co, or Ni can be used in solid state synthesis of cathode active material. The selective recovery of Mn, Co, and Ni as individual reaction products can be carried out independent of each other. Thus, the method can be employed on leach solutions that contain one or more of Mn, Co, and Ni, preferably two or more of Mn, Co, and Ni, such as all of said battery metals. Likewise, one or more, such as two or more of Mn, Co, and Ni, or all of said battery metals, can be selectively precipitated and recovered as reaction products from leach solutions containing the same. Preferably, all of said one or more battery metals selected from the group consisting of Mn, Co, and Ni are recovered, when present in the leach solution.

After the selective precipitation and recovery of battery metals present in the leach solution, the remaining solution is subjected to a sulphate removal step, preferably wherein sulphate is removed as a salt different from sodium sulphate. The removal of sulphate provides a solution rich in lithium hydroxide. Preferably the sulphate is removed as barium sulphate (BaSO₄) or calcium sulphate (CaSO₄), most preferably barium sulfate. The barium sulphate can be recovered as a value added product and can additionally provide for a simplified downstream process when compared to alternative sulfates.

In some embodiments of the method of the present disclosure, the black mass is derived from Li-ion batteries. Li-ion batteries can comprise one or more of lithium cobalt oxide, lithium manganese oxide, and lithium nickel manganese cobalt oxide, the processing of which will produce leach solutions that contain at least one of Mn, Co, and Ni. Examples of such oxides are lithium cobalt oxide (LiCoO₂), lithium manganese oxide (LiMn₂O₄, or Li₂MnO₃), or lithium nickel manganese cobalt oxide (LiNiMnCoO₂, also abbreviated NMC). These are all common types of Li-ion battery cathode materials that can be recycled in hydrometallurgical processes and wherein reaction products of Mn, Co, and/or Ni can be selectively precipitated upon reaction with ozone and by pH adjustment.

In some preferred embodiments, the black mass is derived from NMC type batteries, whereby the leach solution contains all of Mn, Co, and Ni. The process of the present disclosure is particularly preferable for the treatment of such leach solutions, as it provides benefits over conventional processes that commonly rely on solvent extraction, which in turn demands large processing volumes and thereby suffers from poor scalability, in particular upon the recovery of several different battery metals. In the method of the present disclosure, all of Mn, Co, and Ni can be recovered in a simplified process by stepwise and selective precipitation.

In the method of the present disclosure, the black mass is preferably subjected to an organics removal step prior to being subjected to leaching. Such an organics removal step can be, for example, a thermal treatment step evaporating or degrading organic compound present therein. Carrying out an organics removal step prior to the leaching of the black mass will minimize interference of organic compounds in the recovery process. Likewise, since the method of the present disclosure does not require any solvent additions, removal of these before the battery metal recovery process reduces or eliminates the need for carrying out an organics removal step on the leach solution. It should, however, be noted that the method is not limited to thermally treated black mass, as the solvent removal can be carried out by alternative or complementary processing steps.

In some embodiments of the method for recovery of metals from black mass is a method wherein the black mass leach solution, in addition to Li, contains Mn, Co and Ni as battery metals. In such embodiments, the method of the present disclosure provides for a holistic method, wherein all of said metals can be selectively recovered, and wherein the reaction products can be employed in solid synthesis of NMC cathode active materials (CAM). Furthermore, the selective recovery of all of Mn, Co, and Ni by stepwise pH adjustment and precipitation does not require complicated equipment or process connections. The method can be carried out in an easily scalable processing plant, without the need to introduce, for example solvent extraction units for complementary recovery. This reduces the processing volumes when compared to methods relying on solvent extraction, whereby also less process effluents and waste material are produced.

The black mass leach solution can be provided by leaching a black mass in an aqueous medium, such as water. In some embodiments of the method of the present disclosure, the black mass leach solution is provided 1 by subjecting black mass to acid leaching. Preferably, the black mass is Li-ion battery black mass. The acid leaching can be carried out in an aqueous solution containing inorganic acid, in particular containing sulfuric acid. The sulfate ions that are derived from sulfuric acid used as acid in the leaching step will be removed in the sulphate removal step. In some embodiments, hydrogen peroxide can be present in the leach solution. Alternatively, or additionally, the leach solution contains sulfur dioxide, optionally in combination with oxygen. The leaching can be carried out under conventional conditions, such as at a temperature below the boiling point of the aqueous medium, e.g., 70-90 °C, and using a residence time of about 2-5 hours. The pH of the aqueous solution can be, for example, 0.1-3.0, or 1.5-1.8, without being limited thereto. The benefits of providing the black mass leach solution 1 by subjecting black mass to acid leaching is that Mn, Co, and Ni all are selectively precipitated and recovered at acidic pH, whereby acid addition is not needed to reach the desired pH. Furthermore, said battery metal components are efficiently transferred from the black mass, in particular Li-ion black mass, to the leach solution under acidic conditions. Sulfuric acid is a preferred acid, both as leaching acid and as acid for pH adjustment, in particular due to the inclusion of the sulfate removal step in the process. The leach solution can be separated from a solid leach residue by solid-liquid separation, whereby the solid leach residue is discarded or processed further separately from the leach solution. The leach solution is in the method of the present disclosure further subjected to the step of reacting the leach solution 2 with ozone, and selectively precipitating and recovering battery metals by pH adjustment, as well as the step 3 of carrying out sulphate removal.

In some embodiments, the method comprises subjecting the black mass leach solution to a step of removing impurity elements 1' prior to the step of reacting the black mass leach solution 2 with ozone, preferably wherein the impurity elements are selected from aluminum, iron, fluoride, and copper. Black mass typically contains considerable amounts of other metals besides Li, Mn, Co, and Ni, in particular aluminum (Al), iron (Fe), and copper (Cu). Aluminum and iron are typically removed from hydrometallurgical processes as low-value products, while copper can be recovered as value-added products. Said impurity elements, i.e., Al, Fe, fluoride (F⁻), and Cu are, when present in the black mass, typically transferred to the leach solution during the leaching step, and can in Li-ion battery leach solutions be present at relatively high concentration, with 1 g/l Fe, 3-4 g/l Al, and 10 g/l Cu representing typical amounts, without being limited thereto. In order to achieve pure battery grade products, it is beneficial to remove such impurity elements at an early stage. In particular, unless removed from solution at this stage of the process, said impurity elements tend to contaminate the Mn reaction product, which is obtained upon reacting the leach solution 2 with ozone. The step of removing impurity elements can comprise removing one, two, three, or four of said impurity elements independently of each other.

In some embodiments of the present disclosure, the step of removing impurity elements 1' comprises contacting the leach solution with hydrogen sulfide (H₂S) or lithium sulfide (Li₂S) to form copper sulfide (CuS). The hydrogen sulfide, which can be introduced into the leach solution in gas form, reacts with Cu forming copper sulfide (CuS), which in turn can be removed from the solution as a precipitate, for example by solid-liquid separation. Similarly, lithium sulfide forms copper sulfide upon reaction with Cu, which can be removed as a precipitate. The hydrogen sulfide, or lithium sulfide, can be added in a molar ratio of 1:1 with respect to the copper content of the leach solution. The pH during the copper removal step is preferably 1.5-1.8. The reaction can be carried out at elevated temperature, such as a temperature around 80°C. Under said conditions, a residence time of around 1 h is typically sufficient. When acid leaching is used, the copper removal can thereby be carried out at essentially the same process conditions as the leaching step. If the pH needs to be adjusted upwards, lithium hydroxide (LiOH) is preferably added as base prior to the step of removing impurities. By addition of lithium hydroxide, contamination of the leach solution with elements not already present therein can be avoided, as for example, no sodium ions are added.

Conventional processes for copper removal in hydrometallurgical processes commonly rely on chemical precipitation by reaction with inorganic precipitants, such as sodium hydroxide, sodium carbonate, sodium bicarbonate, sodium sulfide, or calcium hydroxides. Such inorganic precipitants introduce counterions into the leach solution, which not necessarily are present therein. In particular sodium can be introduced in considerable amounts upon neutralization and impurity removal, whereby sodium sulphate can be formed by reaction with sulfuric acid present in the leach solution. The removal of sodium sulphate requires an additional purification step, and the sodium sulfate itself is recovered as by-product that typically is discarded as a low-value product or waste product. In the embodiment of contacting the leach solution with hydrogen sulfide, the copper sulfide formed can be recovered as a value-added product, simultaneously avoiding the formation of sodium sulphate.

In further some embodiments of the present disclosure, the step of removing impurity elements 1' comprises adjusting the pH of the leach solution to a pH of 3.0-6.0, preferably 4.0-5.4 to precipitate aluminum and iron, more preferably wherein the pH is adjusted in two stages. In particular in the preferred ranges, co-precipitation of the battery metals Mn, Co, and Ni, can be avoided during this step. When the pH is adjusted in two stages, which further reduces the risk of co-precipitation, the step of removing impurity ions preferably comprises adjusting the pH to 3.0-5.0, such as 4.0-4.5 in the first stage, and adjusting the pH to 5.0-5.4 in the second stage. The precipitation of iron can be further facilitated by addition of hydrogen peroxide. The temperature during the step of removing impurity ions can be, for example 50-70°C, such as around 60°C, without being limited thereto. A residence time of 2 h is typically sufficient to under said conditions precipitate aluminum and iron contained in the leach solution. The residence time can thereby be, for example, 1-3 h. The pH of the leach solution is preferably adjusted upwards by addition of LiOH as base, thereby not adding new components to the leach solution. Aluminum and iron precipitate can be removed from the leach solution by solid-liquid separation, such as in the form of aluminum and iron hydroxide precipitate, or a mixed oxide and hydroxide precipitate. The step of removing impurity ions can also comprise removal of fluoride ions, whereby fluoride will precipitate and be removed together with the aluminum and iron precipitat.

Carrying out a step of removing impurity ions prepares the leach solution for the subsequent step 2 of reacting the black mass leach solution with ozone, and reduces the risk of co-precipitation of impurity products with the reaction products containing Mn, Co, or Ni. This, in turn, reduces the need for product purification and simplifies the process when solid state synthesis of CAM, or pCAM, is an integrated part therein.

After carrying out the step of removing impurity ions, the pH of the leach solution is adjusted to a level suitable for selectively precipitating one or more of Mn, Co and Ni by reaction with ozone, thereby forming reaction products thereof, most suitably MnO₂, CoOOH, and NiOOH, respectively. The precipitation of the reaction products of said metals is pH dependent, being Mn > Co > Ni when listed in order of increasing pH. Thus, the pH of the leach solution is adjusted to a level of the first precipitating battery metal product present in the leach solution. The pH adjustment is preferably done by addition of sulfuric acid or lithium hydroxide.

In some embodiments of the method, Mn is selectively precipitated and recovered 2.1 by adjusting the pH to 1.8-2.0. Upon reaction with ozone, Mn ions present in the leach solution form manganese oxide (MnO₂) in accordance to the reaction presented in Formula 1 below. The manganese oxide can be selectively precipitated and recovered at high purity within said pH range.

Mn²⁺ + O₃ + H₂O → MnO₂ + 2 H⁺ + O₂ (1)

The molar ratio of Mn to O₃ in the above reaction can be 1:1-1:2, or 1:1-1:1.5, preferably 1:1-1:1.1, such that ozone is present in small excess. The reaction is preferably carried out at a temperature of 25-60°C. The residence time can be 5-7 h. The expected reaction product is manganese oxide, i.e., akhtenskite. Upon reaction with ozone, acid is formed, wherein addition of alkali, preferably LiOH, can be beneficial to maintain the pH within the above-mentioned range of 1.8-2.0. At lower pH, the reaction slows down, although it would work to some extent. Thereby, in some preferred embodiments, the pH is maintained within a pH of 1.8-2.0 during the step of reacting the black mass leach solution with ozone for Mn recovery.

In some embodiments of the method, Co is selectively precipitated and recovered 2.2 by adjusting the pH to 4.0-5.0. Upon reaction with ozone, Co ions present in the leach solution form cobalt oxyhydroxide (CoOOH) in accordance to the reaction presented in Formula 2 below. The cobalt oxyhydroxide can be precipitated and recovered at high purity within said pH range.

2 Co²⁺ + O₃ + 3 H₂O → 2 CoOOH + 4 H⁺ + O₂ (2)

The molar ratio of Co to O₃ in the above reaction can be 1:1-1:2, or 1:1-1:1.5, preferably 1:1-1:1.1, such that ozone is present in small excess. The reaction is preferably carried out at a temperature of 40-60°C. The residence time can be 2-4 h, which typically is sufficient for precipitating the cobalt contained in the leach solution. The expected reaction product is cobalt oxyhydoxide. Upon reaction with ozone, acid is formed, wherein addition of alkali, preferably LiOH, can be beneficial to maintain the pH within the above-mentioned range of 4.0-5.0. Thereby, in some preferred embodiments, the pH is maintained within a pH of 4.0-5.0, such as a pH of more than 4 and less than 5, during the step of reacting the black mass leach solution with ozone for Co recovery.

In some embodiments of the method, Ni is selectively precipitated and recovered 2.3 by adjusting the pH to 6.0-7.0. Upon reaction with ozone, Ni ions present in the leach solution form nickel oxyhydroxide (NiOOH) in accordance to the reaction presented in Formula 3 below. The nickel oxyhydroxide can be precipitated and recovered at high purity within said pH range.

2 Ni²⁺ + O₃ + 3 H₂O → 2 NiOOH + 4 H⁺ + O₂ (3)

The molar ratio of Ni to O₃ in the above reaction can be 1:1-1:2, or 1:1-1:1.5, preferably 1:1-1:1.1, such that ozone is present in small excess. The reaction is preferably carried out at a temperature of 40-60°C. The residence time can be 3-4 h, which typically is sufficient for precipitating the nickel contained in the leach solution. The expected reaction product is nickel oxyhydoxide. Upon reaction with ozone, acid is formed, wherein addition of alkali, preferably LiOH, can be beneficial to maintain the pH within the above-mentioned range of 6.0-7.0. Thereby, in some preferred embodiments, the pH is maintained within a pH of 6.0-7.0, such as a pH of more than 6 and less than 7, during the step of reacting the black mass leach solution with ozone for Ni recovery.

In particular preferred embodiments of the present disclosure, all of Mn, Co, and Ni are precipitated and recovered by adjusting the pH of the leach solution stepwise, in the first step 2.1 to a pH of 1.8-2.0, in the second step 2.2 to pH 4.0-5.0, and in the third step 2.3 to a pH of 6.0-7.0, and at each step reacting the leach solution with ozone, and precipitating and recovering a reaction product, for example by solid liquid separation.

In the embodiments presented above, ozone can be supplied at each step of pH adjustment, and/or during the residence time of each precipitation step 2.1, 2.2, 2.3.

In preferred embodiments of the present disclosure, the reaction products recovered in the step of reacting the leach solution 2 with ozone are selected from the group of manganese dioxide (MnO₂), cobalt oxyhydroxide (CoOOH), and nickel oxyhydroxide (NiOOH), preferably all of said products are recovered. Said reaction products can be directly used in solid state synthesis of CAM, and are thereby preferred reaction products. The oxyhydroxides are typically less stable than the corresponding oxides. However, the oxyhydroxides have higher oxidation state and are preferable in solid state synthesis of CAMs. If, for example, Ni is precipitated at a higher pH than the ranges disclosed herein, such as neutral or slightly alkaline pH, the precipitation of nickel oxide (Ni₂O₃) will be favored. When nickel oxide is used in solid state synthesis of CAM, the Ni is typically converted into NiOOH, for example by heat treatment. Thereby, an extra step is required for nickel oxide products in said embodiment of CAM or pCAM synthesis.

The leach solution that is remaining after the recovery of Mn, Co, and Ni can have a high sulfate concentration, which typically is derived from sulfuric acid added in the leaching step and/or steps of adjusting the pH. Mainly, such a pH adjustment towards a more acidic pH can be carried out prior to the recovery Mn in embodiments that include an impurity removal step 1'. For environmental reasons, the sulfate should be removed prior to discarding the effluent. Commonly, the sulphate is removed as sodium sulphate, which requires an extra crystallization step and the formation of a low-value precipitate. The use of barium hydroxide in the sulfate removal step is beneficial as the reaction product, namely barium sulphate, is a value-added product that can be used in the mining industry, such as a lubricant in the drilling process in mines. Thus, in further preferred embodiments of the present disclosure, the sulfate removal step 3 is carried out by contacting the solution obtained after the recovery of the reaction products with barium hydroxide Ba(OH)₂ to form barium sulfate (BaSO₄). The barium sulfate is formed as a precipitate, which can be recovered by solid-liquid separation. The reaction is presented in Formula 4 below.

2 Li²⁺ + SO₄²⁻ + Ba(OH)₂ → BaSO₄ + 2 LiOH (4)

The barium hydroxide can be added in a molar ratio of about 1:1-1:1.1, such as 1: 1.05, as it is beneficial to add barium hydroxide only in small excess. The reaction can be carried out at a temperature of, for example, 60-70°C. The residence time can be 1-2 h, which typically is sufficient for the formation of barium sulphate as precipitate.

In some embodiments, the method of the present disclosure comprises carrying out a purification step 4 on the solution that has been subjected to sulphate removal 3. The leach solution that has undergone the step of battery metal recovery 2 as well as the sulphate removal 3 still contains lithium, the recovery of which is beneficial and even required in some areas by local regulations. The solution obtained from the sulphate removal step 3 can, however, contain impurities that are beneficial to remove. The remaining impurities are typically present on a residual level. One such component is unreacted barium (Ba) derived from the sulphate removal step 3. Barium can in the purification step 4 be precipitated as barium carbonate (BaCO₃) upon reacting the remaining leach solution with carbon dioxide (CO₂). Precipitation of barium carbonate is preferably carried out as a first stage in the purification step 4. Upon reaction with carbon dioxide, also lithium carbonate (Li₂CO₃) can be formed. The precipitated BaCO₃ and LiCO₃ can be separated from solution by solid-liquid separation, whereby an at least partially purified leach solution containing lithium is obtained. The lithium is typically in the solution in the form of lithium hydroxide. Additionally, or alternatively, the solution is subjected to ion exchange to further purify the solution that has been subjected to sulphate removal 3, typically as a second stage in the purification step 4. The ion exchange can be used to further purify the solution in preparation of LiOH recovery 5. Said purification step 4, or stages thereof, can be altered depending on the contaminants present in solution. Such contaminants can be, for example, sodium and potassium present at low concentrations.

In some preferred embodiments, the method comprises recovering Li 5 from the solution that has been subjected to sulphate removal 3, and optionally a further purification step 4, preferably wherein Li is recovered 5 by crystallization of LiOH. The lithium hydroxide can be crystallized in the form of a hydrate (LiOH·H₂O). The obtained crystalline LiOH product is obtainable in a degree of purity that is suitable for use as raw material battery manufacturing processes, such as battery grade LiOH·H₂O. In the method of the present disclosure, high lithium recovery is achievable, with a potential recovery percentage of 90% or higher.

In alternative processes, such as solvent extraction processes, it is common to recover lithium as lithium carbonate. The use of lithium carbonate in the solid synthesis of CAM requires the lithium carbonate to first be converted into lithium hydroxide, which adds an extra step to the CAM synthesis. Furthermore, in such recovery processes, the sulphate removal takes place after the recovery of lithium carbonate, whereas in the method of the present disclosure the lithium hydroxide stream is essentially pure.

In further some preferred embodiments, the pH is adjusted by addition of lithium hydroxide (LiOH), preferably by use of LiOH solution obtained as an aqueous stream in a step 5 of recovering Li. By using LiOH as alkaline solution for the adjustment of pH in the method of the present disclosure, the addition of base cations not yet present in solution can be avoided. This, in turn, allows for a simplified process, where the number of steps are reduced. Additionally, it allows for the recovery of BaSO₄ as value added product in the step of sulphate removal 3.

The solution obtained after the sulphate removal 3, and the optional purification step 4, is a solution rich in lithium, in particular lithium hydroxide. The solution can have a lithium content, of for example, 10-12 g/l, without being limited thereto. After recovering LiOH by crystallization, the mother liquor typically contains around 18-22 g/l of LiOH, without being limited thereto. The use of the mother liquor, or a processed or unprocessed fraction thereof, as alkali in the method of the present disclosure is beneficial not only for the reasons mentioned above, but also as it reduces the energy consumption of the crystallization process. There is namely no need to remove water from the solution obtained from the LiOH crystallization step to further crystallize LiOH, but instead, the solution can be used in one or more of the previous processing steps, as these steps require the solution to be diluted. Optionally, the mother liquor can be subjected to further purification steps, or concentration or dilution steps, prior to upstream recycling. Any of the above-mentioned lithium hydroxide solutions can be used to adjust the pH in the method of the present disclosure. From a process economy perspective, it can be beneficial to use an unprocessed or processed side stream obtained in the step of recovering Li, such as the mother liquor of obtained after LiOH crystallization.

When a LiOH solution obtained from LiOH crystallization is further purified prior to recycling the solution downstream in the process, different purity grades of the solution can be recycled to different step. When an impurity removal step 1' is employed for the removal of Al, Fe, and/or F, a secondary grade LiOH solution can be used. For pH adjustment in the Mn, Co, and Ni recovery, respectively, it is preferred to a solution of primary grade, as the solution otherwise can contribute to build-up of impurities in the process. Likewise, a water condensate obtained from LiOH crystallization process can be recycled and used in the black mass leaching.

The possibility to recycle lithium hydroxide provides for good process economy, and also reduces the negative economic impact on additional neutralization steps. For example, prior to the impurity removal 1', wherein Al and/or Fe is precipitated, the pH of the solution is increased above the optimal pH for the Mn recovery. However, since carrying out this additional impurity removal step 1' prior to the Mn recovery 2.1 improves the purity of the Mn reaction product, which can be of battery grade purity, the additional pH adjustment becomes beneficial. Furthermore, since this adjustment can be carried out with an internal process stream, the additional costs related thereto are very moderate.

In some embodiments of the present disclosure, the method comprises a step of solid state synthesis 6 of cathode active material (CAM), preferably wherein MnO₂, CoOOH and NiOOH obtained as reaction product in the step of reacting the leach solution 2 with ozone are mixed with LiOH to form a precursor CAM (pCAM) mixture. The method can further comprise grinding the pCAM mixture in anhydrous ethanol, drying and sintering the mixture under oxygen flow.

In the above method of solid synthesis 6 of CAM, the LiOH is preferably provided in the form of its hydrate (LiOH·H₂O). The solid state synthesis 6 of CAM can include two stages, as presented below.

In the first stage, LiOH, preferably in the form of LiOH·H₂O, as well as MnO₂, CoOOH and NiOOH are mixed in desired ratio to form a pCAM. The ratio of lithium to transition metals can be, for example 1.05:1, wherein the ratio of Ni:Co:Mn can be 90:5:5, without being limited thereto. The selective recovery of each of the Mn, Co, and Ni reaction products as pCAM materials provides for the option to freely select a suitable ratio, as these are directly obtainable by the method of the present disclosure as individual components and in battery grade purity.

In the second stage, the pCAM mixture is processed mechanically, such as ground. The grinding can be carried out with ball grinding beads, for example for 5-6 hours. Furthermore, the grinding can take place in anhydrous ethanol. The ground pCAM is thereafter dried, such as blast dried at 70-90°C, and sintered. The sintering can be carried out at a temperature of 650-750°C, preferably under oxygen flow. The duration of the sintering step can be 10-14 hours.

The final product obtained in the solid state synthesis 6 of CAM as described above can be used as cathode active material in Li-ion battery manufacturing. Thereby, the method of the present disclosure provides for a holistic method for sustainable battery black mass recycling.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of concentrations, temperatures, etc., to provide a thorough understanding of embodiments of the invention. One skilled in the relevant art will recognize, however, that the invention can be practiced without one or more of the specific details, or with other methods, components, materials, etc.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The following non-limiting example is intended merely to illustrate the advantages obtained with the embodiments of the present invention.

### EXAMPLE

### Example 1

The example as set forth in the following represents a preferred embodiment of the present disclosure, wherein the reaction products are obtained in battery grade purity.

In the test, thermally treated battery black mass obtained from spent Li-ion batteries of NMC type was leached in an aqueous solution containing sulfuric acid and hydrogen peroxide at a temperature of 80°C and at a residence time of 4 hours. The solid leach residue was separated from the leach solution by solid-liquid separation, thereby providing a leach solution containing ions of Li, Mn, Co, and Ni.

The leach solution provided in the leaching step was subjected to an impurity removal step. First, the pH of the leach solution was adjusted to a range of 1.5-1.8. The solution was then contacted with H₂S gas for copper removal. The H₂S gas was supplied in a molar ratio of 1 with respect to the copper ions present in the solution. The reaction was carried out for 1 h at a temperature of 80°C. CuS was precipitated and recovered by solid-liquid separation as value added product.

In the next step, the solution obtained from the Cu removal as presented above was subjected to a step of Fe and Al removal. The pH of the solution was first increased to a pH of 4-4.5 by addition of LiOH in aqueous solution, and thereafter further to a pH of 5-5.4 to complete the reaction. The reaction was carried out at a temperature of 60°C for a total duration of 2 hours. Solid iron and aluminum precipitate, comprising mixed oxides and hydroxides thereof, was formed and removed from the leach solution.

The leach solution obtained from the impurity removal step was thereafter subjected to a step of reaction with ozone for the recovery of Mn, Co, and Ni, respectively. First, the pH of the leach solution was adjusted by sulfuric acid addition to a pH of 1.8-2.0. Ozone was then introduced into the solution at a Mn/O₃ molar ratio of 1.1. The temperature was maintained at 30-50°C during the reaction, the duration of which was 6 h. Solid MnO₂ precipitate was precipitated and recovered by solid liquid separation in battery grade purity.

The leach solution, from which Mn and impurities had been removed, was thereafter subjected to a step of Co recovery. The pH of the solution was adjusted to a range of 4-5 using an aqueous LiOH solution. The temperature was maintained at 40-60°C and the reaction was carried out for 3 hours. Ozone was added to the solution in slight excess, with a O₃/Co molar ratio of 1-1.1. CoOOH was precipitated and recovered by solid liquid separation.

The treated leach solution obtained from the step of Co recovery was neutralized to a pH of 6-7 for Ni precipitation. Similar to the Mn and Co precipitation steps, the reaction was carried out at said pH and at a temperature of 40-60°C, for a residence time of 4 hours. The ozone was added in a O₃/Co molar ratio of 1-1.1 NiOOH was precipitated and recovered by solid liquid separation.

Next, the leach solution from the previous step was reacted with barium hydroxide in a slight excess, with the Ba/SO₄ molar ratio being 1.05, to thereby precipitate barium sulphate. The reaction was carried out at 60-70°C for a time of 90 min. The barium sulphate was recovered by solid liquid separation as value added product, while the remaining leach solution was processed further for lithium recovery.

The remaining leach solution, which was rich in LiOH, was further purified. First, residual barium from the previous step was precipitated by contacting the solution with carbon dioxide, thereby forming solid BaCO₃. The barium carbonate was removed from solution by solid-liquid separation. To ensure recovery of high purity LiOH, the solution was further purified using ion exchange, thus producing essentially pure LiOH solution.

The LiOH solution from the previous step was subjected to an evaporation and crystallization step, in which solid LiOH·H₂O recovered in battery grade purity.

As a final step, the MnO₂, CoOOH, and NiOOH, obtained from the step of contacting the leach solution with ozone, was mixed in a Mn:Co:Ni molar ratio of 5:5:90. The obtained mixture was further mixed with LiOH·H₂O in a ratio of 1.05:1 (Li:mixture), thus obtaining a pCAM mixture. The pCAM mixture was ground using ball grinding for 6 hours in anhydrous ethanol. The obtained mixture was thereafter blast dried at 80°C and sintered at around 700°C for 12 hours under oxygen flow.

It should be noted that the above presented example can be adjusted in accordance to the intended end use of the products obtained and further processing steps applied thereto. Thereby, if the products are not directly employed in the solid synthesis of CAM, for example, the impurity removal or purification can be omitted or carried out differently. The need for such impurity removal or purification steps also depends on the contaminants present in the leach solution provided.

### INDUSTRIAL APPLICABILITY

The method of the present disclosure can be used for the recovery of valuable battery metals from black mass in battery recycling processes.

In particular, the present method provides a sustainable and scalable method for the recovery of manganese, cobalt, and nickel from spent Li-ion batteries, wherein the products obtained by said method are suitable for use in solid state synthesis of cathode active materials.

### Reference Signs List

- 1: Providing black mass leach solution
- 1': Impurity removal
- 2: Reacting black mass leach solution with ozone
- 2.1: Mn precipitation and recovery
- 2.2: Co precipitation and recovery
- 2.3: Ni precipitation and recovery
- 3: Sulphate removal
- 4: Purification step
- 5: Li recovery
- 6: Solid state CAM synthesis

## Claims

1. A method for the recovery of metals from black mass, the method comprising the steps of:
- providing a black mass leach solution (1) containing lithium (Li) and one or more battery metals selected from the group consisting of manganese (Mn), cobalt (Co), and nickel (Ni),
- reacting the black mass leach solution (2) with ozone (O₃) and selectively precipitating and recovering said one or more battery metals selected from the group consisting of Mn, Co, and Ni as reaction products by stepwise pH adjustment, and
- subjecting the solution obtained after the recovery of the reaction products to a sulphate removal step (3).

2. The method according to claim 1, wherein the black mass leach solution, in addition to Li, contains Mn, Co and Ni as battery metals.

3. The method according to claim 1 or 2, wherein the black mass leach solution is provided (1) by subjecting black mass to acid leaching.

4. The method according any one of the preceding claims, wherein the method comprises subjecting the black mass leach solution to a step of removing impurity elements (1') prior to the step of reacting the black mass leach solution (2) with ozone, preferably wherein the impurity elements are selected from aluminum, iron, fluoride, and copper.

5. The method according to claim 3, wherein the step of removing impurity elements (1') comprises contacting the leach solution with hydrogen sulfide (H₂S) or lithium sulfide (Li₂S) to form copper sulfide (CuS).

6. The method according to claim 3 or 4, wherein the step of removing impurity elements (1') comprises adjusting the pH of the leach solution to a pH of 3.0-6.0, preferably 4.0-5.4 to precipitate aluminum and iron, more preferably wherein the pH is adjusted in two stages.

7. The method according to any one of the preceding claims, wherein Mn is selectively precipitated and recovered (2.1) by adjusting the pH to 1.8-2.0.

8. The method according to any one of the preceding claims, wherein Co is selectively precipitated and recovered (2.2) by adjusting the pH to 4.0-5.0.

9. The method according to any one of the preceding claims, wherein Ni is selectively precipitated and recovered (2.3) by adjusting the pH to 6.0-7.0.

10. The method according to any one of the preceding claims, wherein the reaction products recovered in the step of reacting the leach solution (2) with ozone are selected from the group of manganese dioxide (MnO₂), cobalt oxyhydroxide (CoOOH), and nickel oxyhydroxide (NiOOH), preferably all of said products are recovered.

11. The method according to any one of the preceding claims, wherein the sulfate removal step (3) is carried out by contacting the solution obtained after the recovery of the reaction products with barium hydroxide Ba(OH)₂ to form barium sulfate (BaSO₄).

12. The method according to any one of the preceding claims, wherein the method comprises carrying out a purification step (4) on the solution that has been subjected to sulphate removal (3).

13. The method according to any one of the preceding claims, wherein the method comprises recovering Li (5) from the solution that has been subjected to sulphate removal (3), and optionally a further purification step, preferably wherein Li is recovered (5) by crystallization of LiOH.

14. The method according to any one of the preceding claims, wherein the pH is adjusted by addition of lithium hydroxide (LiOH), preferably by use of LiOH solution obtained as an aqueous stream in a step (5) of recovering Li.

15. The method according to any one of the preceding claims, wherein the method comprises a step of solid state synthesis (6) of cathode active material (CAM), preferably wherein MnO₂, CoOOH and NiOOH obtained as reaction product in the step of reacting the leach solution (2) with ozone are mixed with LiOH to form a precursor CAM (pCAM) mixture.
